# EUROPÄISCHE PATENTSCHRIFT

(11) **EP 0 420 797 B1**
(45) Veröffentlichungstag und Bekanntmachung des Hinweises auf die Patenterteilung: **15.12.1993**
(21) Anmeldenummer: 90810670.1
(22) Anmeldetag: 05.09.1990
(51) Int. Cl.: E04G 17/14, E04G 17/06, F16B 43/00

(54) **Anschlagkörper für Betonschalungen**
Abutment piece for concrete forms
Cale pour coffrages à béton

(30) Priorität: 23.09.1989 DE 3931831
(43) Veröffentlichungstag der Anmeldung: 03.04.1991
(73) Patentinhaber: HILTI Aktiengesellschaft, 9494 Schaan (LI)
(72) Erfinder: Rothenbuehler, Walter, CH-9473 Gams (CH); Schmidle, Josef, A-6811 Göfis (AT)
(74) Vertreter: Wildi, Roland

(56) Entgegenhaltungen:
- EP-A- 0 282 445
- EP-A- 0 321 396
- FR-A- 2 260 018
- GB-A- 1 166 301

## Beschreibung

Die Erfindung betrifft einen Anschlagkörper für Betonschalungen, mit Durchtrittsöffnung und Widerlager für einen Nagel, wobei zwischen Widerlager und Anschlagkörper eine Knautschzone vorgesehen ist.

Aus der DE-A 30 009 672 ist ein Anschlagkörper bekannt, der zur seitlichen Abstützung von Betonschalungen vorgesehen ist und mittels eines Nagels an einem Bauteil befestigt wird. Für den Nagel ist eine Durchtrittsöffnung und ein Widerlager vorgesehen, wobei zwischen Widerlager und Anschlagkörper eine Knautschzone angeordnet ist. Die Knautschzone wirkt als Stossdämpfer und verhindert Beschädigungen des Anschlagkörpers.

Die Knautschzone ist von einem verschiebbar auf dem Nagel sitzenden Ring gebildet, dessen Stirnseite als Widerlager dient. Der Nagel ist vor dem Einführen in die Durchtrittsöffnung des Anschlagkörpers mit dem Ring zu bestücken, was sich als umständlich erweist. Dabei besteht auch die Gefahr, dass vergessen wird, den Ring auf den Nagel aufzubringen. Ein Nachteil der bekannten Anordnung besteht vor allem auch darin, dass der Ring bei der Stauchung radial aufreisst und vom Schaft des Nagels abfällt. Dadurch geht die Abstützung des Anschlagkörpers durch den Nagel verloren.

Eine weitere bekannte Druckschrift, die FR-A-2 260 018 betrifft ein schellenartiges Element zum Befestigen von Rohrleitungen oder Schläuchen auf entsprechenden Untergründen. Dieses schellenartige Element weist ein Flanschteil und ein Befestigungselement auf. Das Flanschteil besitzt einen zusammenpressbaren Anschlag, wobei zwischen dem Anschlag und dem Kopf des Befestigungselementes ein Bremsring angeordnet ist. Beim Festlegen des Flanschteiles am Untergrund mit Hilfe des Befestigungselementes erfolgt eine Zerstörung des Bremsringes, so dass der Kopf des Befestigungselementes auf dem Anschlag zu liegen kommt.

Der Erfindung liegt die Aufgabe zugrunde, einen Anschlagkörper mit Widerlager und Knautschzone zu schaffen, der eine einfache Handhabung und eine sichere Funktion gewährleistet.

Erfindungsgemäss wird die Aufgabe dadurch gelöst, dass die Knautschzone als mit dem Anschlagkörper einstückig verbundene, stauchbare, freistehende Hülse ausgebildet ist, die auf einem nabenartigen Innenteil sitzt, welches über ein Bodenteil mit einem im wesentlichen hohlzylindrischen Mantelteil des Anschlagkörpers in Verbindung steht.

Durch die einstückige Verbindung mit dem Anschlagkörper kann das stauchbare Teil auch bei allfälligem radialem Reissen nicht abspringen, so dass die sichere Funktion des Anschlagkörpers gewährleistet ist.

Bei Verwendung von Kunststoff als Material für den Anschlagkörper erfolgt die einstückige Verbindung vorzugsweise dadurch, dass das stauchbare Teil unmittelbar am Anschlagkörper angespritzt ist. Das mit dem Anschlagkörper auf diese Weise verbundene stauchbare Teil steht somit derart zur Verfügung, dass nach dem Auflegen des Anschlagkörpers auf das Bauteil lediglich der Nagel durch die Durchtrittsöffnung hindurch in das Bauteil eingetrieben werden muss. Erfolgt dies mittels eines Pulverkraftbetriebenen Setzgerätes, kann sich dieses mündungsseitig am stauchbaren Teil seitlich abstützen, was insbesondere handhabungstechnische Vorteile hat.

Das als freistehende Hülse ausgebildete stauchbare Teil kann dabei von einer dem Widerlager zugewandten Stützfläche des Anschlagkörpers abragen. Bei Ueberenergie werden die vom Nagel auf das Widerlager eingeleiteten Kräfte über den Anschlagkörper direkt in das Bauteil eingeleitet, wobei die Hülse entsprechend der Ueberenergie axial gestaucht wird.

Mit Vorteil ist das freie Ende der Hülse gegenüber der Aussenkontur des Anschlagkörpers axial zurückversetzt. Dadurch wird sichergestellt, dass der eingetriebene Nagel den Anschlagkörper axial nicht überragt. Auf diese Weise wird vermieden, dass die Betonschalungen beim Heranführen an den Anschlagkörper allenfalls an den Nagel anschlagen, was zu einer die Verankerung des Nagels beeinträchtigenden Beanspruchung führen könnte.

Die Erfindung wird nachstehend anhand einer Zeichnung, die ein Ausführungsbeispiel wiedergibt, näher erläutert. Es zeigen:
- Fig. 1: einen Anschlagkörper im Längsschnitt;
- Fig. 2: einen Grundriss des Anschlagkörpers nach Fig. 1;
- Fig. 3: einen mittels eines Nagels an einem Bauteil befestigten Anschlagkörper nach Fig. 1.

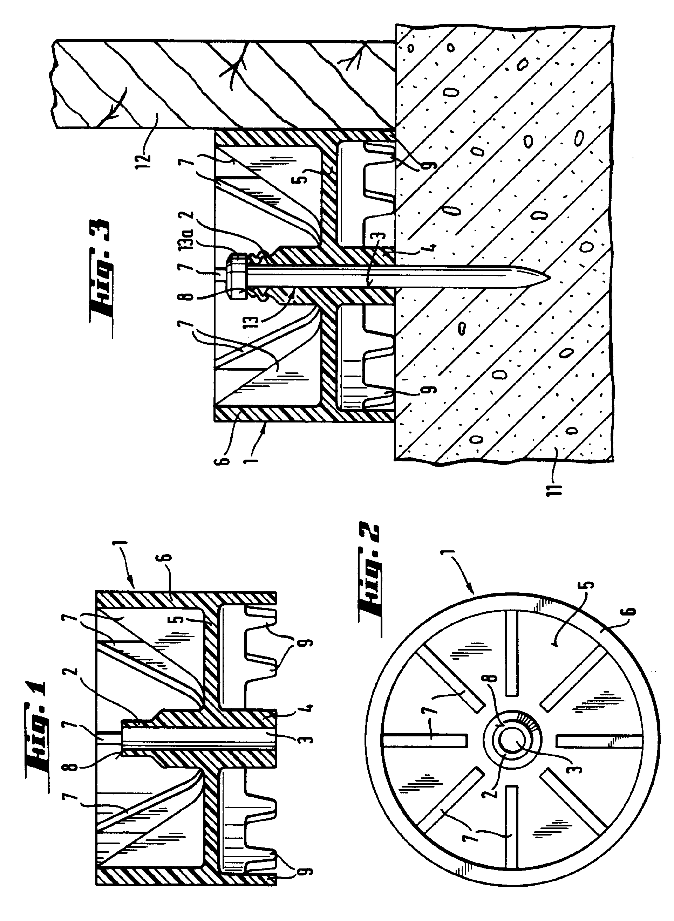

Der Anschlagkörper 1 besteht aus Kunststoff und ist einstückig mit einer als Knautschzone dienenden Hülse 2 verbunden. Der Anschlagkörper 1 und die Hülse 2 sind von einer Durchtrittsöffnung 3 durchsetzt. Die Hülse 2 sitzt auf einem nabenartigen Innenteil 4 des Anschlagkörpers 1, das durch ein Bodenteil 5 mit einem im wesentlichen hohlzylindrischen Mantelteil 6 verbunden ist. Aus Versteifungsgründen sind zwischen dem Bodenteil 5 und dem Mantelteil 6 Rippen 7 vorgesehen, wie in der Fig. 2 verdeutlicht.

Das freistehende Ende der Hülse 2 dient als Widerlager 8 und ist gegenüber der stirnseitigen Aussenkontur des Mantelteiles 6 um etwa den Durchmesser der Hülse 2 zurückversetzt. Die andere Stirnseite des Mantelteiles 6 weist über den Umfang verteilt mehrere Stützfinger 9 auf.

Gemäss Fig. 3 ist ein Anschlagkörper 1 auf einem beispielsweise aus Beton bestehenden Bauteil 11 befestigt, um seitlich eine Betonschalung 12 abzustützen. Die Stützfinger 9 stellen auch bei allfälliger Unebenheit der Oberseite des Bauteiles 11 eine stabile Abstützung des Anschlagkörpers 1 sicher. Zum Befestigen des Anschlagkörpers 1 am Bauteil 11 ist ein Nagel 13 durch die Durchtrittsöffnung 3 hindurch in das Bauteil 11 eingetrieben worden. Das vorzugsweise mit Hilfe eines pulverkraftbetriebenen Setzgerätes erfolgende Eintreiben des Nagels 13 kann je nach Festigkeit des Bauteiles 11 im Bereich der Eintreibstelle von Befestigungsstelle zu Befestigungsstelle zu unterschiedlich tiefem Eintreiben des Nagels 13 führen. Je nach Eintreibtiefe verschiebt der gegen Ende des Eintreibvorganges am Widerlager 8 auflaufende Kopf 13a des Nagels 13 das Widerlager 8 in Eintreibrichtung mit, wobei die Hülse 2, wie in Fig. 3 gezeigt, axial gestaucht wird. Der Kopf 13a bleibt in Anlage am Widerlager 8, so dass über die an das Innenteil 4 angebundene gestauchte Hülse 2 der Anschlagkörper 1 gegen das Bauteil 11 gehalten wird. Das Stauchen der Hülse 2 trägt auch zum Abbau der dem Nagel 13 vermittelten Ueberenergie bei.

## Patentansprüche

1. Anschlagkörper (1) für Betonschalungen (12), mit Durchtrittsöffnung (3) und Widerlager (8) für einen Nagel (13), wobei zwischen Widerlager (8) und Anschlagkörper (1) eine Knautschzone vorgesehen ist, **dadurch gekennzeichnet**, dass die Knautschzone als mit dem Anschlagkörper (1) einstückig verbundene, stauchbare, freistehende Hülse (2) ausgebildet ist, die auf einem nabenartigen Innenteil (4) sitzt, welches über ein Bodenteil (5) mit einem im wesentlichen hohlzylindrischen Mantelteil (6) des Anschlagkörpers (1) in Verbindung steht.

2. Anschlagkörper nach Anspruch 1, dadurch gekennzeichnet, dass das freie Ende der Hülse (2) gegenüber der Aussenkontur des Anschlagkörpers (1) axial zurückversetzt ist.

## Claims

1. Seating element (1) for concrete casings (12) comprising a passage (3) and an abutment (8) for a nail (13), in which respect a crumple zone is provided between the abutment (8) and the seating element (1), **characterised in that** the crumple zone is arranged as a sleeve (2), which is integrated with the seating element (1), compressible, free-standing and seated on a notch-like inner part (4) which is connected via a base element (5) to a substantially hollow cylindrical casing part (6) of the seating element (1).

2. Seating element according to claim 1, **character****ised in that** the free end of the sleeve (2) is axially set back relative to the outside contour of the seating element (1).

## Revendications

1. Pièce de calage (1) pour coffrages à béton (12) avec un orifice traversant (3) et une butée (8) pour un clou (13), une zone déformable étant prévue entre la butée (8) et la pièce de calage (1), caractérisée par le fait que la zone déformable est réalisée sous forme de douille (2) autoportante, comprimable, d'un seul tenant avec la pièce de calage (1), qui repose sur une partie interne (4) en forme de moyeu qui est reliée par une partie de fond (5) avec une partie d'enveloppe (6) sensiblement cylindrique creuse.

2. Pièce de calage selon la revendication 1, caractérisée par le fait que l'extrémité libre de la douille (2) est en retrait axialement par rapport au contour extérieur de la pièce de calage (1).
